# EUROPEAN PATENT SPECIFICATION

(11) **EP 1 853 010 B1**
(45) Date of publication and mention of the grant of the patent: **04.08.2010**
(21) Application number: 06009377.0
(22) Date of filing: 05.05.2006
(51) Int. Cl.: H04L 12/56

(54) **Method for ring management in an ethernet network comprising a plurality of redundancy managers**
Ring Management Verfahren in einem Ethernet Netzwerk mit mehreren redundanten Managern
Méthode de gestion d'un anneau Ethernet avec plusieurs gestionnaires redondants

(43) Date of publication of application: 07.11.2007
(73) Proprietor: Nokia Siemens Networks GmbH & Co. KG, 81541 München (DE)
(72) Inventor: de Frias Rebelo Nunes, Pedro Ricardo, 2795016 Linda-A-Velha (PT)

(56) References cited:
- WO-A-03/073703
- STALLINGS, W.: "Local Area Network Standards" SAMS & COMPANY, 1990, pages 172-173, XP002401127 Carmel, IN 46032, USA

## Description

The invention relates to a method for ring management in an Ethernet network according to claim 1.

The principle of Ethernet ring protection mechanism ERP is e. g. described in the patent US 6,430,151. It relies on a ring or redundancy manager RM associated to a node to coordinate protection activities. If there is an interruption in the network, the redundancy manager connects the line ends and thereby ensures continued network operation within milliseconds. A similar network having redundancy properties is disclosed in the application WO 03/073703.

An essential feature of the Ethernet is to avoid a loop. When a redundancy manager node (referred to as RM -redundancy manager) perceives that the ring is healthy, i.e. all nodes and links are functioning, it blocks one of its ports for reception und transmission of normal data traffic to interrupt a physical loop. All traffic is blocked for that port except for Ethernet ring protection control traffic, such as test packets. These "test packets" are frequently transmitted from both ports (terminals) of the RMs.

If by mistake or malfunction two or more ring nodes are configured to take the RM role, this could lead to undesired effects as permanent segmentation of the ring or permanent loop configuration.

The ring segmentation happens because all RMs transmit test packets and all RMs receive test packets. So each RM assumes that the ring is operational and blocks one of its ring ports

to break the loop, with the result that some nodes become unreachable. Because the blocking of the data traffic has no effect for the transmission of test packets, all RMs receive test packets further on and maintain blocking one of their ring ports.

The second case may happen if the RMs do not forward or accept each others test packets. Each RM assumes that the ring is damaged and will unblock its ports. This results in a loop formation and to circulating data frames blocking all data traffic.

From a token ring network, described in Stallings, W. "Local Area Network Standards", Sams & Company, 1990, XP002401127, USA, page 172 lines 1-13 is a method known to select only one active monitor in a token ring network. A station that detects the loss of an active monitor issues a claim token frame. This station claims the status of an active monitor. All stations compare in a received frame the source address with its own address. If the source address matches its own address, the station continues to transmit claim-token frames. If the source address is less than its own address the station ignores the incoming frames and continues to transmit claim-token frames. If the source address is greater than its own address, then the station reverts to a repeater mode. In this way the station with the highest address becomes an active monitor.

The problem is to avoid more than one active redundancy managers in an Ethernet Ring Network and to select only one.

The solution of these problems is described in claim 1 and in the depending claims.

The main point is that only one active redundancy manager RM is allowed in a ring. Therefore a rank number is dedicated to each RM, and each RM sends information packets, referred to as "test packets" (these could be any kind of packets) with its rank number to all other RMs. All RMs with higher rank numbers (lower priority) (or, by definition, lower rank numbers) switch into a passive mode according to a selection process. Each RM evaluates only its "own test packet" - initiated and emitted by itself and forwarded over the ring by all other nodes/RMs. Depending on the information about the other RMs added to the test packet, the RM switches to a passive mode and becomes a passive RM or remains active. Only the active RM with the lowest (or, by definition, highest) rank number remains active. The whole process is independent of the management system.

After all RMs with only one exception have switched to the passive mode, the only active RM still blocks one of its ports continuously for regular traffic and starts the Ethernet Ring Protection process ERP in due time.

A similar process selects a passive redundancy manager with the lowest rank number (highest priority) to become an active RM.

Other advantages features are disclosed in the description and the dependent claims.

The invention is described by way of different examples and accompanying drawings and will become more apparent with reference to the following description along with the accompanying drawings, in which
Figure 1 shows an Ethernet ring in normal state,
Figure 2 shows an Ethernet ring with two active redundancy manager, each blocking one of its ports,
Figure 3 shows an Ethernet ring with two redundancy manager unblocking their ports,
Figure 4 shows a flow chart for disabling/enabling a redundancy manager
Figure 5 shows a simplified flow chart and
Figure 6 shows a flow chart for disabling/enabling a redundancy manager for larger systems.

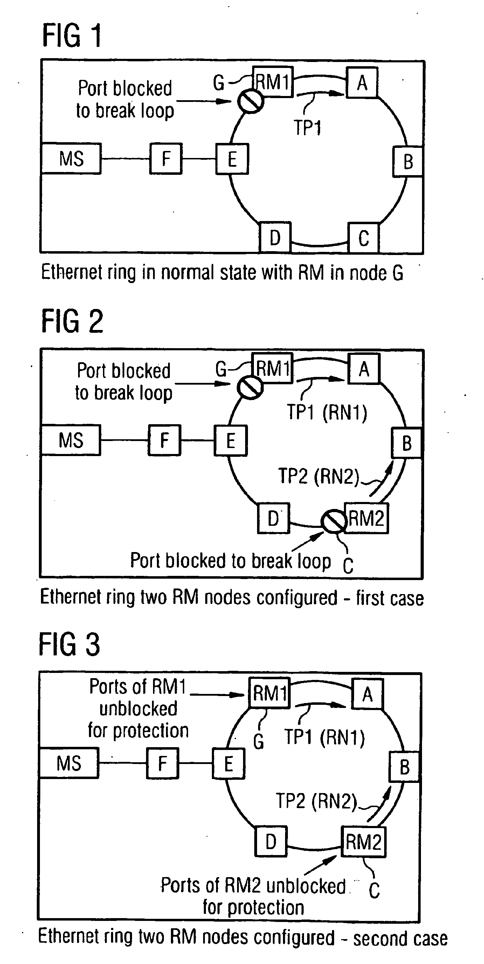

**Figure 1** shows an Ethernet ring with nodes A - E and G in normal state. The node G is activated as redundancy manager RM1 and blocks one of its ports for data traffic to interrupt the ring. A management system MS is connected with the ring over a further node F.

**Figure 2** shows an Ethernet ring with two active redundancy managers RM1 in node G and RM2 in node C. The ring can be a part of a larger network. Both RMs have transmitted test packets (control packets) TP1 and TP2 respectively and had come to the conclusion that the ring is working because they forwarded or accepted the test packets of the other RM. Each RM has blocked one of its ports for data traffic, so the nodes E and D cannot be reached any more.

If both RMs do not accept each others test packets they may come to the conclusion that the ring is permanently damaged. Each RM unblocks its previously blocked port with the result that a loop is arranged leading to circulating frames in the loop according to **figure 3** - till the ring is blocked again.

A solution for these problems is based on
1. Detection that there are more than one active redundancy managers RMs in the ring,
2. The RMs in a ring select self-depending one of the RMs to be the only active RM to guarantee functionality in this ring and to unblock its port,
3. All remaining RM nodes, the "disabled/not selected" or "passive" RM nodes unblock their ports for traffic. They forward modified test packets from other RMs till the test packets reach the (e.g. active) RM, who initiated the test packet. Each RM evaluates only its own test packet for changing its mode between "active" and "passive" and does not forward it.

The detection and selection of an "active RM" is based on test packets. A selection criteria is a minimum or maximum selection of an address or a "rank number", e.g. generated randomly or according to traffic requirements or assigned to the RMs by the management system MS. E. g. the address can also be used as the "rank number". A "minimum rank number" (highest priority) is used in the description and the claims as an example but could be exchanged with a "maximum rank number" or "extreme rank number" (always highest priority).

The modified test packets TP1 which is send by a first redundancy manager RM1 contains (amongst other information) the source address "SOURCE" (of the first RM1) in an address field AF and the rank number RN1 in a rank number field RF, which can be used from all other RMs in the ring to inform the first RM1 about the rank number (and the status) of any other RM in the ring, when this is relevant for the selection process.

If two or more RMs are active, the RM1 with the lowest rank number RN = 1 (highest priority) should be elected as "active RM" and all others are switched to the passive mode.

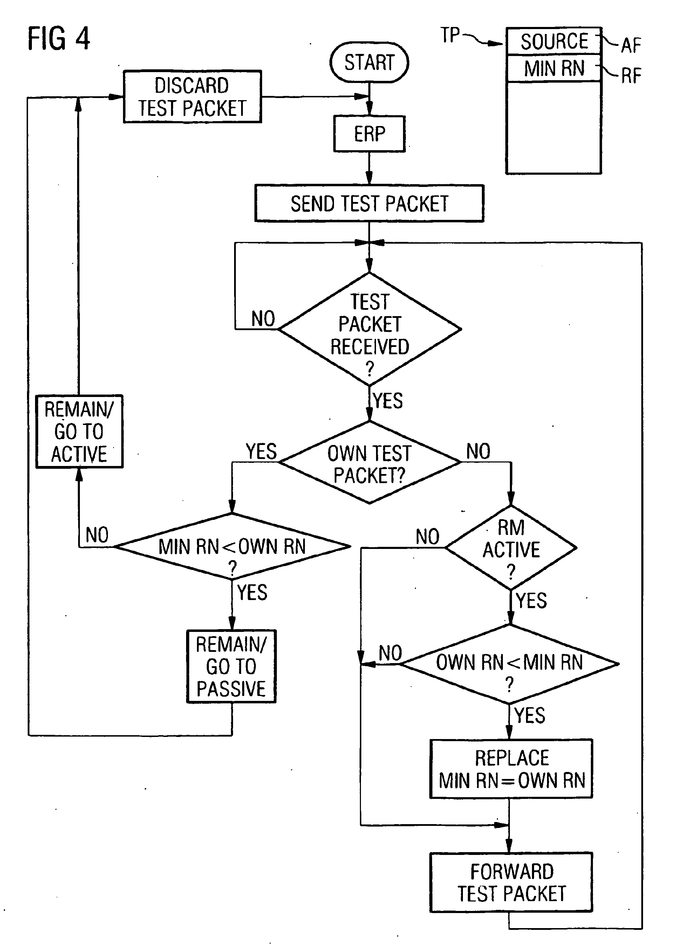

Assuming a simplified flow chart shown in figure 4 and a simplified ring with only two RMs according to an ERP-process (Ethernet ring protection) the selection process starts in a simplified ring with only two RMs by transmitting test packets from each RM1 and RM2. Of course, there are several possibilities to implement the process.
1a. The active first RM1 sends its "own test packet" TP1 according to the test packet TP shown in figure 1, which contains source address, e.g. "SOURCE = 1", and the rank number RN1 = 1 (figure 1) of the RM1. The source address can also be used as the rank number (in this case the rank number field RF can be left empty). In our examples the RM1, who initialises a test packet, inserts its source address in the address field and its rank number RN1 as Min RN in the RF field. If the source address and the rank number are used, the rank number can be changed independent from the source number.
1b. All other RMs in the ring check the received test packet, which is initiated by RM1.
1c. If a TP is received from a passive RM or a node without RM-Function, this test packet TP1 is forwarded unchanged till it is received from the second active RM2 (right side of the flow chart).
1d. The second active RM2 checks the minimum rank number MIN RN of the TP1, which is lower than its own RN, and forwards the TP1 also unchanged to the first RM1.
1e. The first RM1 recognises its "own test packet" TP1 and checks the MIN RN in the rank number field RF. Because its RN1 = 1 is lower than the RN =2 of the RM2 the MIN RN has remained unchanged and RM1 remains active (MIN RN ≥ OWN RN).

Now the procedure for the test packet send by RM2 is described:
2a. The second RM2 sends a test packet TP2 (figure 2), which contains its source address e.g. "2" and its rank number MIN RN = RN2 = 2 (which also can be its source address).
2b. All other RMs in the ring check the test packet TP2, which was emitted from RM2 (right side of the flow chart).
2c. All passive RMs and nodes in the ring forward this TP2 unchanged to the first active RM1 (right side of the flow chart).
2d. The first active RM1 receives the TP2 and checks if its own rank number RN1 = 1 is lower than the received rank number OWN RN < MIN RN = RN2 in the RN field, replaces RN2 by RN1 and the forwards the altered TP2 to RM2.
2e. RM2 receives and recognises its own test packet TP2, checks if MIN RN is lower than its OWN RN and switches because of MIN RN < RN2 to the passive mode.

The result is that only RM1 with the lowest RN in the ring remains active.

If two or more RMs are configured in a ring and if instead of the active node another node shall take over the role of an active RM than the old RM is disabled by a management system and has no control function at all. That means that the disabled RM associated to a node does not work as an active or a passive RM; another possibility is to change the rank numbers of the RMs. Then the RM selection process has to be started.

Now it is assumed that the RM1 is in the passive mode and RM2 is in an active mode.
3a. RM1 sends it test packet with MIN TP = RN = 1.
3b. All other RMs check this test packet.
3c. All passive RMs forward this test packet TP1 unchanged.
3d. Also when RN2 is active he forwards the test packet TP1 unchanged because OWN RN > MIN RN.
3e. RM1 receives and evaluates its own test packet TP1. Because MIN RN is not lower than its own RN1 (MIN RN = OWNRN; or empty) it switches to "active".

Because the passive RM1 does not change MIN RN both RMs are at first switched to an active mode Than according to the procedure 1a - 1e and 2a - 2e the RM2 (higher rank number) is switched to the passive mode and RM1 with the lowest rank number in the ring is selected to be the only remaining RM. By using this method a loop for data traffic is avoided.

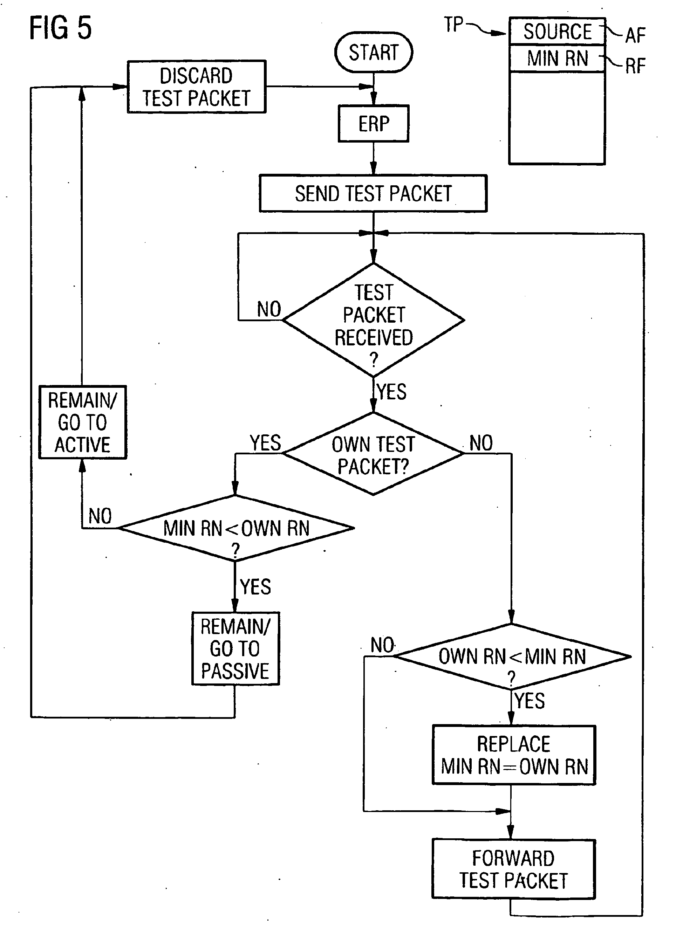

The procedure and the flowchart becomes even more simple if no differentiation between active and passive redundancy managers is necessary, and both the procedure and the corresponding flowchart is simpler. This flow chart is shown in **figure 5**. The redundancy manager with the lowest rank number RN - active or passive - shall always become the only active redundancy manager.

In this case there is
The RM sending a test packet inserts its rank number OWN RN as MIN RN in the RN field, and all other passive or active RMs check if their rank number is lower than MIN RN (right side of the flow chart), and if so, they replace MIN RN by their OWN RN. The RM, who initiated the test packet, checks if MIN RN < OWN RN and remains or switches to passive if the condition is fulfilled, otherwise he remains or switches to active.

A temporary loop may be created using this flow chart, if the process is started while RM1 is passive and RM2 is active. RM1 can switch to passive and unblock its ports for data traffic before RM1 switches to the active mode and blocks one of his ports. This temporary loop is usually not problematic.

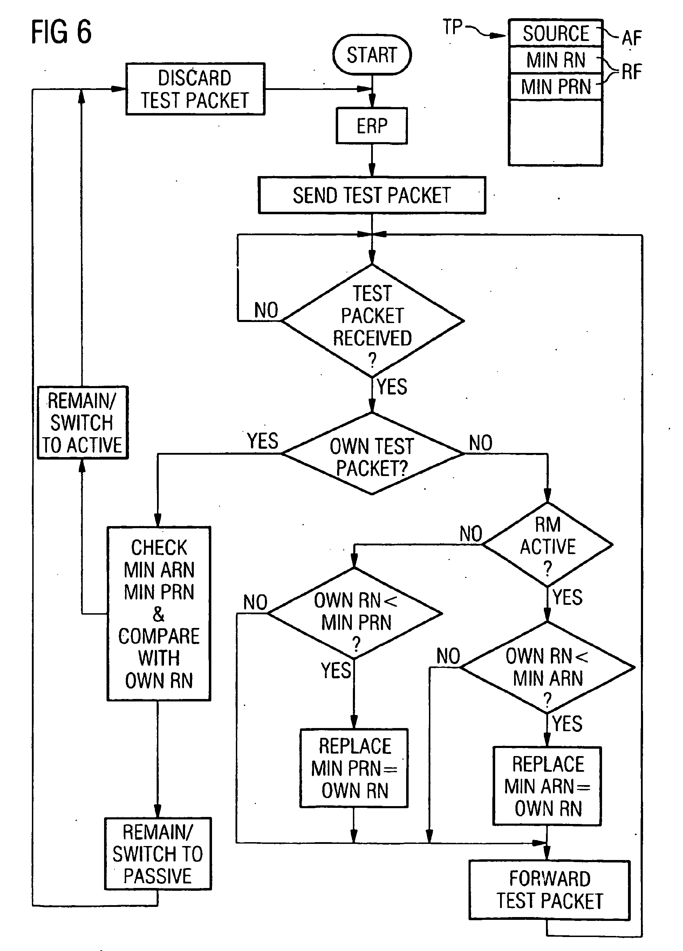

If the ring has many redundancy managers, it is advantageously to use two different RN fields for "active rank numbers" ARN and "passive rank numbers" PRN of active and passive redundancy managers. The flow chart is shown in **figure 6****.**

A lowest active rank number (highest priority) MIN ARN of all active redundancy managers and a lowest active rank number MIN PRN of all passive redundancy managers in a ring is determined by transmitting and evaluating the test packet, and if an active or passive redundancy manager evaluates its own test packet, he has the information if another active or passive redundancy manager with a lower rank number (higher priority) is in the ring and unnecessary switching can be avoided, e.g. when all redundancy managers are in the passive mode (or many with lower rank numbers) and only one of them has to change to the active mode.

## Claims

1. Method for ring management in an Ethernet network comprising a plurality of redundancy managers (RM1, RM2) in a ring, which can switch into an active or a passive mode,
**characterised in that**
a rank number (RN1, RN2, ..) is assigned to each redundancy manager (RM1, RM2, ...),
each redundancy manager (RM1, RM2, ...) transmits test packets (TP1, TP2, ...) with its source address and/or its own rank number (RN1, RN2, ...) representing the priority of the redundancy manager (RM1, RM2, ...),
each other redundancy manager (RM1, ...) in the ring checks the received test packets (TP2, ...), adds its own rank number (RN1) if its priority is higher, and forwards the test packet (TP2, ...),
all other nodes (A-E) without redundancy manager function in the ring forward the test packet (TP1, TP2) unchanged, and each redundancy manager (RM2), that receives its own test packet (TP2) transmitted over the ring, evaluates said test packet (TP2), and switches from an active mode into a passive mode or remains in the passive mode, if its own priority according its own rank number (RN2) is lower than the priority according to the rank number (RN1) of another redundancy manager (RM1) inserted in the test packet (TP2).

2. Method according to claim 1,
**characterised in that**
an active redundancy manager (RM1) only replaces a minimum rank number (MIN RN) in a received test packet by its own rank number (OWN RN) in a rank number field (RF) of the received test packet (TP2), if its own rank number (RN1) is less than a received rank number (RN2) stating that its own priority is higher.

3. Method according to claim 2,
**characterised in that**
an active redundancy manager (RM2), upon reception of its own test packet (TP2) sent back over the ring, analyses its own test packet (TP2) and switches into a passive mode, if the received rank number (MIN RN = RN1) in its own test packet (TP2) is lower than its own rank number (OWN RN = RN2), otherwise he remains active.

4. Method according to claim 2,
**characterised in that**
a passive redundancy manager (RM1), upon reception of its own test packet (TP1) sent back over the ring, analyses its own test packet (TP1) and switches to an active mode if the received minimum rank number
(MIN RN = RN2) is not lower than its own rank number (RN1) or if the rank number field (RF) is empty, otherwise he remains passive.

5. Method according to claim 1,
**characterised in that**
a redundancy manager (RM1), upon reception of a test packet (TP2), replaces a minimum rank number (MIN RN) in a rank number field (RF) of the received test packet (TP2) by its own rank number (OWN RN), if its own rank number (RN1) is less than a received rank number (RN2).

6. Method according to claim 5,
**characterised in that**
a redundancy manager (RM2), upon reception of its own test packet (TP2) sent back over the ring,
analyses its own test packet (TP2) and switches into the passive mode or remains in the passive mode if its own rank number (RN2) is higher than the received rank number (RN1), otherwise the redundancy manager (RM2) switches into or remains in the active mode.

7. Method according to claim 1,
**characterised in that**
an active rank number (ARN1) or a minimum active rank number (MIN ARN) of an active redundancy manager (RM1) is stored in a separate minimum active rank number field (ARF) in the test packet, and
a passive rank Number (PRN2) or a minimum passive rank number (MIN PRN) of a passive redundancy manager (RM2) is stored in a minimum passive rank number field (PRF) in the test packet.

8. Method according to claim 7,
**characterised in that**
a passive redundancy manager (RM1) replaces a received minimum passive rank number (MIN PRN) in a received test packet (TP1) by its own passive rank number (ARN1), when its passive rank number (OWN PRN = PRN1) is lower than the passive minimum rank number (MIN PRN),
an active redundancy manager (RM2) replaces a received minimum active rank number (MIN ARN) in a received test packet (TP2) by its own active rank number (ARN2), when its own active rank number (OWN ARN = ARN2) is lower than the active minimum rank number (MIN ARN), and
the passive redundancy manager (RM1), upon reception of its own test packet (TP1) sent back over the ring, analyses its own test packet (TP1) and switches to the active mode if the received minimum passive rank number (MIN PRN) and the received minimum active rank number (MIN PRN2; MIN ARN2) inserted in its own test packet (TP) are not lower than its own rank number (RN1), and
the active redundancy manager (RM2), upon reception of its own test packet (TP2) sent back over the ring, analyses his own test packet (TP2) and switches to the passive mode if the received active minimum rank number (MIN ARN = RN1) inserted in its own test packet (TP2) is lower than its own active rank number (ARN2).

9. Method according to claim 1,
**characterised in that**
the redundancy managers (RM1, RM2) rank numbers (RM1, RM2) are changed or the active redundancy manager (RM1) is disabled by a management system to change from the active redundancy manager (RM1) to another active redundancy manager (RM2).

## Patentansprüche

1. Verfahren zum Ringmanagement in einem Ethernet-Netzwerk, das eine Mehrzahl von Redundanzmanagern (RM1, RM2) in einem Ring umfasst, die in einen aktiven oder einen passiven Modus umschalten können,
**dadurch gekennzeichnet, dass**
jedem Redundanzmanager (RM1, RM2, ...) eine Rangnummer (RN1, RN2, ...) zugewiesen wird,
jeder Redundanzmanager (RM1, RM2, ...) Testpakete (TP1, TP2, ...) mit seiner Quellenadresse und/oder seiner eigenen Rangnummer (RN1, RN2, ...), die die Priorität des Redundanzmanagers (RM1, RM2, ...) repräsentiert, sendet,
jeder andere Redundanzmanager (RM1, ...) in dem Ring die empfangenen Testpakete (TP2, ...) überprüft, seine eigene Rangnummer (RN1) hinzufügt, wenn seine Priorität höher ist, und das Testpaket (TP2, ...) weiterleitet,
alle anderen Knoten (A-E) ohne Redundanzmanagerfunktion in dem Ring das Testpaket (TP1, TP2) unverändert weiterleiten und jeder Redundanzmanager (RM2), der sein eigenes Testpaket (TP2), das über den Ring übertragen wurde, empfängt, das Testpaket (TP2) auswertet und von einem aktiven Modus in einen passiven Modus umschaltet oder im passiven Modus bleibt, wenn seine eigene Priorität gemäß seiner eigenen Rangnummer (RN2) niedriger als die Priorität gemäß der in das Testpaket (TP2) eingefügten Rangnummer (RN1) eines anderen Redundanzmanagers (RM1) ist.

2. Verfahren nach Anspruch 1, **dadurch gekennzeichnet, dass** ein aktiver Redundanzmanager (RM1) nur dann eine minimale Rangnummer (MIN RN) in einem empfangenen Testpaket durch seine eigene Rangnummer (OWN RN) in einem Rangnummernfeld (RF) des empfangenen Testpakets (TP2) ersetzt, wenn seine eigene Rangnummer (RN1) kleiner als eine empfangene Rangnummer (RN2) ist, wodurch ausgesagt wird, dass seine eigene Priorität höher ist.

3. Verfahren nach Anspruch 2, **dadurch gekennzeichnet, dass** ein aktiver Redundanzmanager (RM2) auf den Empfang seines über den Ring zurückgesendeten eigenen Testpakets (TP2) hin sein eigenes Testpaket (TP2) analysiert und in einen passiven Modus umschaltet, wenn die empfangene Rangnummer (MIN RN = RN1) in seinem eigenen Testpaket (TP2) kleiner als seine eigene Rangnummer (OWN RN = RN2) ist, und er andernfalls aktiv bleibt.

4. Verfahren nach Anspruch 2, **dadurch gekennzeichnet, dass** ein passiver Redundanzmanager (RM1) auf den Empfang seines über den Ring zurückgesendeten eigenen Testpakets (TP1) hin sein eigenes Testpaket (TP1) analysiert und in den aktiven Modus umschaltet, wenn die empfangene minimale Rangnummer (MIN RN = RN2) nicht kleiner als seine eigene Rangnummer (RN1) ist oder wenn das Rangnummernfeld (RF) leer ist, und er andernfalls passiv bleibt.

5. Verfahren nach Anspruch 1, **dadurch gekennzeichnet, dass** ein Redundanzmanager (RM1) auf den Empfang eines Testpakets (TP2) hin eine minimale Rangnummer (MIN RN) in einem Rangnummernfeld (RF) des empfangenen Testpakets (TP2) durch seine eigene Rangnummer (OWN RN) ersetzt, wenn seine eigene Rangnummer (RN1) kleiner als eine empfangene Rangnummer (RN2) ist.

6. Verfahren nach Anspruch 5, **dadurch gekennzeichnet, dass** ein Redundanzmanager (RM2) auf den Empfang seines über den Ring zurückgesendeten eigenen Testpakets (TP2) hin sein eigenes Testpaket (TP2) analysiert und in den passiven Modus umschaltet oder in dem passiven Modus bleibt, wenn seine eigene Rangnummer (RN2) höher als die empfangene Rangnummer (RN1) ist, und der Redundanzmanager (RM2) andernfalls in den aktiven Modus umschaltet oder darin verbleibt.

7. Verfahren nach Anspruch 1, **dadurch gekennzeichnet, dass** eine aktive Rangnummer (ARN1) oder eine minimale aktive Rangnummer (MIN ARN) eines aktiven Redundanzmanagers (RM1) in einem separaten Feld für die minimale aktive Rangnummer (ARF) in dem Testpaket gespeichert wird und
eine passive Rangnummer (PRN2) oder eine minimale passive Rangnummer (MIN PRN) eines passiven Redundanzmanagers (RM2) in einem Feld für die minimale passive Rangnummer (PRF) in dem Testpaket gespeichert wird.

8. Verfahren nach Anspruch 7, **dadurch gekennzeichnet, dass** ein passiver Redundanzmanager (RM1) eine empfangene minimale passive Rangnummer (MIN PRN) in einem empfangenen Testpaket (TP1) durch seine eigene passive Rangnummer (ARN1) ersetzt, wenn seine passive Rangnummer (OWN PRN = PRN1) kleiner als die passive minimale Rangnummer (MIN PRN) ist,
ein aktiver Redundanzmanager (RM2) eine empfangene minimale aktive Rangnummer (MIN ARN) in einem empfangenen Testpaket (TP2) durch seine eigene aktive Rangnummer (ARN2) ersetzt, wenn seine eigene aktive Rangnummer (OWN ARN = ARN2) kleiner als die aktive minimale Rangnummer (MIN ARN) ist und
der passive Redundanzmanager (RM1) auf den Empfang seines über den Ring zurückgesendeten eigenen Testpakets (TP1) hin sein eigenes Testpaket (TP1) analysiert und in den aktiven Modus umschaltet, wenn die empfangene minimale passive Rangnummer (MIN PRN) und die empfangene minimale aktive Rangnummer (MIN PRN2; MIN ARN2), die in sein eigenes Testpaket (TP) eingefügt wurden, nicht kleiner als seine eigene Rangnummer (RN1) sind, und
der aktive Redundanzmanager (RM2) auf den Empfang seines über den Ring zurückgesendeten eigenen Testpakets (TP2) hin sein eigenes Testpaket (TP2) analysiert und in den passiven Modus umschaltet, wenn die empfangene aktive minimale Rangnummer (MIN ARN = RN1), die in sein eigenes Testpaket (TP2) eingefügt wurde, kleiner als seine eigene aktive Rangnummer (ARN2) ist.

9. Verfahren nach Anspruch 1, **dadurch gekennzeichnet, dass** die Rangnummern (RN1, RN2) der Redundanzmanager (RM1, RM2) geändert werden oder der aktive Redundanzmanager (RM1) durch ein Managementsystem gesperrt wird, um von dem aktiven Redundanzmanager (RM1) zu einem anderen aktiven Redundanzmanager (RM2) zu wechseln.

## Revendications

1. Procédé de gestion d'anneau dans un réseau Ethernet comprenant une pluralité de gestionnaires de redondance (RM1, RM2) dans un anneau, qui peuvent passer à un mode actif ou un mode passif,
**caractérisé en ce que**
un numéro de rang (RN1, RN2, ...) est attribué à chaque gestionnaire de redondance (RM1, RM2, ...),
chaque gestionnaire de redondance (RM1, RM2, ...) transmet des paquets test (TP1, TP2, ...) avec son adresse source et/ou son propre numéro de rang (RN1, RN2, ...) représentant la priorité du gestionnaire de redondance (RM1, RM2, ...),
chaque autre gestionnaire de redondance (RM1, ...) dans l'anneau contrôle les paquets test (TP2, ...) reçus, ajoute son propre numéro de rang (RN1) si sa priorité est supérieure, et achemine le paquet test (TP2, ...),
tous les autres noeuds (A-E) sans fonction de gestionnaire de redondance dans l'anneau acheminent le paquet test (TP1, TP2) non modifié, et
chaque gestionnaire de redondance (RM2), qui reçoit son propre paquet test (TP2) transmis sur l'anneau, évalue ledit paquet test (TP2) et passe d'un mode actif à un mode passif ou reste dans le mode passif, si sa propre priorité en fonction de son propre numéro de rang (RN2) est inférieure à la priorité en fonction du numéro de rang (RN1) d'un autre gestionnaire de redondance (RM1) inséré dans le paquet test (TP2).

2. Procédé selon la revendication 1,
**caractérisé en ce que**
un gestionnaire de redondance (RM1) actif ne remplace un numéro de rang minimum (MIN RN) dans un paquet test reçu par son propre numéro de rang (OWN RN) dans un champ de numéro de rang (RF) du paquet test (TP2) reçu que si son propre numéro de rang (RN1) est inférieur à un numéro de rang (RN2) reçu indiquant que sa propre priorité est supérieure.

3. Procédé selon la revendication 2,
**caractérisé en ce que**
un gestionnaire de redondance (RM2) actif, à réception de son propre paquet test (TP2) renvoyé sur l'anneau, analyse son propre paquet test (TP2) et passe en un mode passif, si le numéro de rang reçu (MIN RN = RN1) dans son propre paquet test (TP2) est inférieur à son propre numéro de rang (OWN RN = RN2), sinon il reste actif.

4. Procédé selon la revendication 2,
**caractérisé en ce que**
un gestionnaire de redondance (RM1) passif, à réception de son propre paquet test (TP1) renvoyé sur l'anneau, analyse son propre paquet test (TP1) et passe en un mode actif si le numéro de rang minimum reçu (MIN RN = RN2) n'est pas inférieur à son propre numéro de rang (RN1) ou si le champ de numéro de rang (RF) est vide, sinon il reste passif.

5. Procédé selon la revendication 1,
**caractérisé en ce que**
un gestionnaire de redondance (RM1), à réception d'un paquet test (TP2), remplace un numéro de rang minimum (MIN RN) dans un champ de numéro de rang (RF) du paquet test reçu (TP2) par son propre numéro de rang (OWN RN), si son propre numéro de rang (RN1) est inférieur à un numéro de rang reçu (RN2).

6. Procédé selon la revendication 5,
**caractérisé en ce que**
un gestionnaire de redondance (RM2), à réception de son propre paquet test (TP2) renvoyé sur l'anneau, analyse son propre paquet test (TP2) et passe en mode passif ou reste en mode passif si son propre numéro de rang (RN2) est supérieur au numéro de rang reçu (RN1), sinon le gestionnaire de redondance (RM2) passe ou reste en mode actif.

7. Procédé selon la revendication 1,
**caractérisé en ce que**
un numéro de rang actif (ARN1) ou un numéro de rang actif minimum (MIN ARN) d'un gestionnaire de redondance (RM1) actif est mémorisé dans un champ de numéro de rang actif minimum (ARF) dans le paquet test, et un numéro de rang passif (PRN2) ou un numéro de rang passif minimum (MIN PRN) d'un gestionnaire de redondance passif (RM2) est mémorisé dans un champ de numéro de rang passif minimum (PRF) dans le paquet test.

8. Procédé selon la revendication 7,
**caractérisé en ce que**
un gestionnaire de redondance passif (RM1) remplace un numéro de rang passif minimum (MIN PRN) reçu dans un paquet test reçu (TP1) par son propre numéro de rang passif (PRN1), lorsque son numéro de rang passif (OWN PRN = PRN1) est inférieur au numéro de rang minimum passif (MIN PRN),
un gestionnaire de redondance actif (RM2) remplace un numéro de rang actif minimum (MIN ARN) reçu dans un paquet test reçu (TP2) par son propre numéro de rang actif (ARN2), lorsque son propre numéro de rang actif (OWN ARN = ARN2) est inférieur au numéro de rang minimum actif (MIN ARN), et
le gestionnaire de redondance passif (RM1) à réception de son propre paquet test (TP1) renvoyé sur l'anneau, analyse son propre paquet test (TP1) et passe en mode actif si le numéro de rang passif minimum (MIN PRN) reçu et le numéro de rang actif minimum (MIN PRN2 ; MIN ARN2) insérés dans son propre paquet test (TP) ne sont pas inférieurs à son propre numéro de rang (RN1), et le gestionnaire de redondance actif (RM2), à réception de son propre paquet test (TP2) renvoyé sur l'anneau, analyse son propre paquet test (TP2) et passe en mode passif si le numéro de rang minimum actif reçu (MIN ARN = RN1) inséré dans son propre paquet test (TP2) est inférieur à son propre numéro de rang actif (ARN2).

9. Procédé selon la revendication 1,
**caractérisé en ce que**
les numéros de rang (RN1, RN2) des gestionnaires de redondance (RM1, RM2) sont changés, ou bien le gestionnaire de redondance actif (RM1) est désactivé par un système de gestion pour passer du gestionnaire de redondance actif (RM1) à un autre gestionnaire de redondance actif (RM2).
